Europäisches Patentamt

European Patent Office

Office européen des brevets

(11) Publication number: **0 053 302**
**B1**

# EUROPEAN PATENT SPECIFICATION

(45) Date of publication of patent specification: **24.04.85**

(21) Application number: **81109558.7**

(22) Date of filing: **06.11.81**

(51) Int. Cl.⁴: **F 24 F 13/00, F 24 F 13/10**

(54) **Low frequency noise and turbulence reducer.**

(30) Priority: **28.11.80 US 211013**

(43) Date of publication of application:
**09.06.82 Bulletin 82/23**

(45) Publication of the grant of the patent:
**24.04.85 Bulletin 85/17**

(84) Designated Contracting States:
**AT DE FR GB IT NL SE**

(56) References cited:
**WO-A-79/00286**
**CH-A- 446 828**
**DE-A-2 705 060**
**GB-A-2 010 469**
**US-A-3 750 839**

(73) Proprietor: **CARRIER CORPORATION**
**Carrier Tower 6304 Carrier Parkway P.O. Box 4800**
**Syracuse New York 13221 (US)**

(72) Inventor: **Inglis, Stephen C.**
**200 West Yates Street**
**East Syracuse New York (US)**

(74) Representative: **Baillie, Iain Cameron et al**
**c/o Ladas & Parry Isartorplatz 5**
**D-8000 München 2 (DE)**

Courier Press, Leamington Spa, England.

## Description

The present invention relates to damper structures and more specifically to the reduction of low frequency noise in damper structures.

Air flow structures such as dampers are subject to self-generated noise which is a function of the velocity and pressure of the delivered air as well as the structural details of the air distribution system. Various techniques have been employed to reduce noise generation. For example, air distribution systems have been lined with sound-absorbing materials, and diffusers in the form of perforate plates have been placed across the flow paths. These techniques have met with varying success. An excessive thickness of sound-absorbing materials is necessary to attenuate low frequency noise; perforate plates can cause excessive pressure drops and the low frequency noise can be reestablished in the recombined flow. Further, these techniques do not address the problem of noise production resulting from flow over the edges of sheet metal members.

The present invention reduces low frequency noise and turbulence in the damper structure by attaching a screen to the top portion of the damper blade. This requires the initial/last portion of the flow to pass through the screen rather than through a narrow slit. According to an alternative solution of the invention or additionally, a screen is placed downstream of the damper and essentially parallel to the air stream so as to break up the large eddies generated at the damper.

Basically, the present invention provides a perforate extension for the damper blade so that the flow path is never solely a narrow slit but rather is only through the perforations of the extension until the damper has opened sufficiently. Conversely, the flow path is only through the perforations when, in the closing of the damper, it is approaching what would be a narrow slit flow path in a conventional damper structure. Further, the wall of the air distribution system nearest the flow path in the opening and closing positions of the damper assembly is lined with a perforate screen which is spaced from the wall to define a chamber which reduces eddies and low frequency noise without providing a restriction in the flow path.

This invention will now be described, by way of example, with reference to the accompanying drawings in which:

Figure 1 is a partially cutaway pictorial view of a damper assembly incorporating the present invention;

Figure 2 is a longitudinal sectional view of the damper assembly in an air distribution system; and

Figure 3 is a table showing the effectiveness of the elements of the present invention alone and in combination.

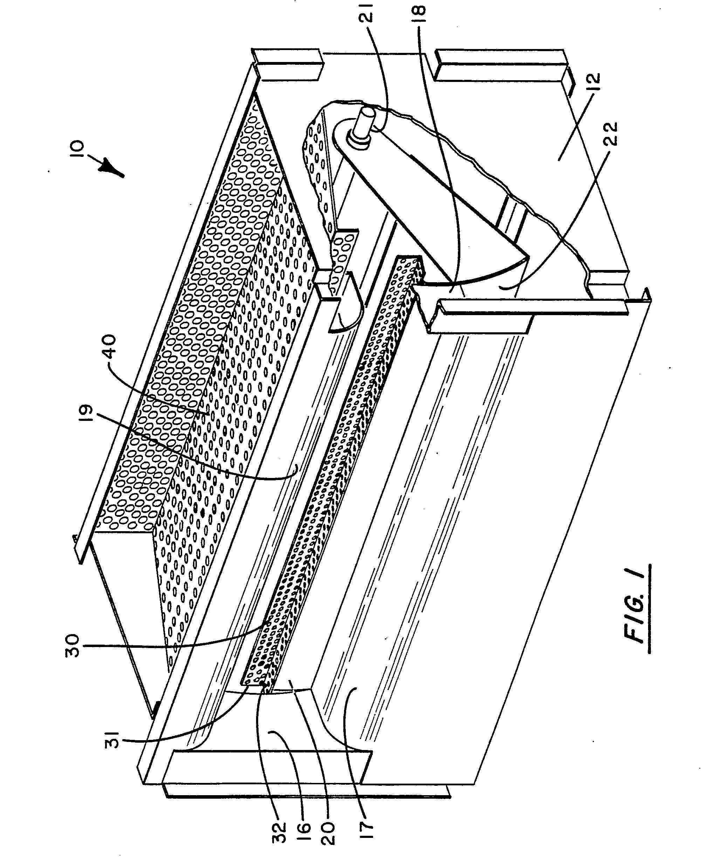

Referring first to Figure 1, the numeral 10 generally designates a damper assembly having a housing 12. The damper 20 is pivoted about rod 21 and includes a curved blade 22 which has a valving action with respect to the inlet defined by sheet metal members 16, 17, 18, and 19 which form a portion of the housing 12 of damper assembly 10. A perforated screen 30 is attached to and extends above blade 22.

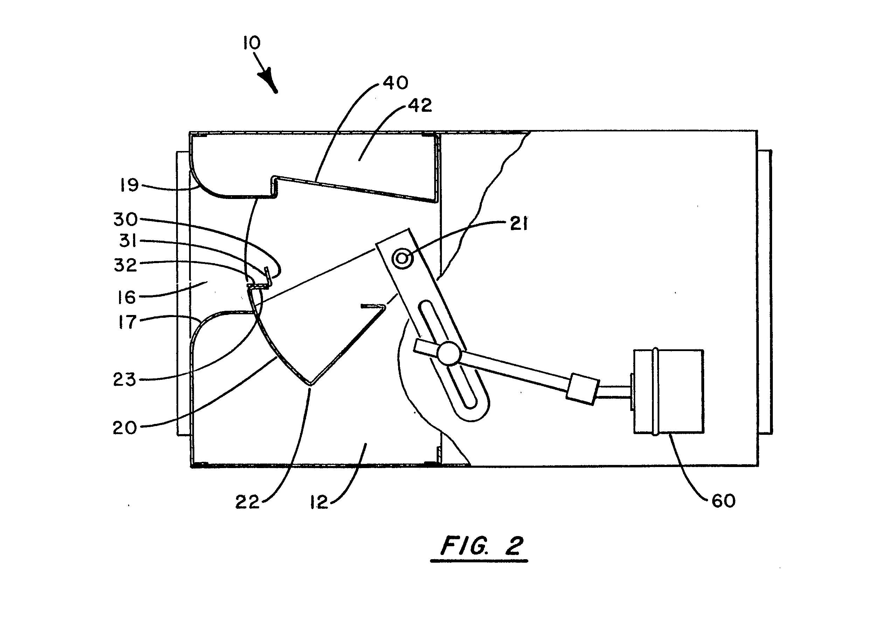

As best shown in Figure 2, screen 30 is formed of two legs, 31 and 32, with a preferred included angle of 75°. Leg 32 of the screen 30 is attached to leg 23 of damper 20 so that leg 31 of the screen extends above the blade 22 for a distance of 1/2 inch (1.27 cm) to 1 inch (2.54 cm) with 3/4 inch (1.91 cm) being preferred. The perforations are preferably 3/16 inch (.48 cm) in diameter and on 1/4 inch (.64 cm) centers which form the apexes of equilateral triangles. The resulting porosity of screen 30 is 51% but this can be varied from about 35% to 65% with acceptable results.

Leg 31 of screen 30 generally falls within a plus or minus 20° position from a plane taken perpendicular to the air flow as damper blade 22 moves from its fully open to its fully closed position when the included angle of legs 31 and 32 is 75°. The leading edge of leg 32 of the screen 30 is in alignment with the leading edge of blade 22. Screen 30 reduces the turbulence caused by the damper which in turn reduces the low frequency noise generated by such air turbulence. The size and porosity of leg 31 of screen 30 is critical. If leg 31 is less than 1/2 inch (1.27) in height then there will not be enough holes in the screen to break up turbulence and some of the vortices shed will roll over the top of the screen. If the leg 31 is in excess of 1 inch (2.54 cm) in height it will extend too far into the air stream such that an excess pressure drop will be created and the air pressure acting on screen 30 will lift the blade 22.

A second screen 40 is located immediately downstream of the damper blade 22 such that air flow through the damper is over the screen 40. Flow through the damper 20 generates large eddies immediately downstream of the damper, however, the screen 40 and the chamber 42 partially defined thereby break up the large eddies thereby reducing the radiate noise levels. The porosity of screen 40 is not critical since the flow path is not through screen 40, but rather it must only provide a non-radiative surface for sound waves resulting from the eddies produced in flowing over the sheet metal edges of the damper. However, a porosity of 35—65% provides acceptable results.

The damper 20 can be system powered wherein the position of blade 22 is determined by the inflation of two bellows indicative of the inlet static pressure and cooling demand from a bleed thermostat. Alternatively, the damper 20 may be positioned by a bellows responsive to the inlet static pressure and an external actuator such as an electric or pneumatic motor to move the blade 22 in response to cooling demand. Damper blade 22 may also be solely positioned by an electric or pneumatic motor 60 responsive to cooling demand as is illustrated in Figure 2. Each of these standard modes of operation of the damper 20 would be conventional but for the air flow patterns and noise reduction caused by the screens 30 and 40. The leg 31 extends up from the damper blade 22 such that, depending upon the height of leg 31, the initial 1/2 to 1 inch (1.27 to 2.54 cm) of opening movement of blade 22 results in all of the air flow going through the perforations in leg 31 and then flowing over the perforate screen 40. The net result is a reduction in low frequency noise due to the resulting reduction in turbulence. Further opening movement of the damper blade 22 permits flow around leg 31 with a portion of the flow still going through the perforations of leg 31. However the air flow will still be over perforate screen 40 and therefore turbulence and the resultant low frequency noise will be reduced. Since this turbulence is a function of the flow restriction, the present invention limits the effectiveness of the restriction function of screen 30 by limiting it to only a portion of the flow path and by not having the flow path go through screen 40. Thus, at no time is restricted flow solely through a narrow slit defined in part by the edge of a sheet metal member forming a part of housing 12.

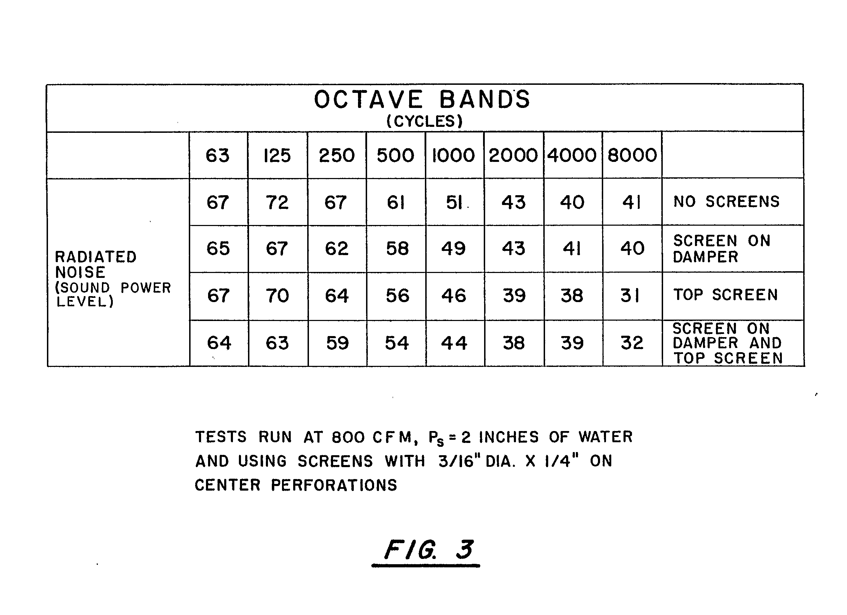

With a damper system run at an air flow of 800 cfm (22.64 m³/min) and a static pressure of two inches (2.54 cm) of water, the individual and combined sound reduction properties of the screens 30 and 40 (measured as sound power levels) are shown in Figure 3. For these comparisons, the perforations in the screens 30 and 40 were 3/16 inch (.48 cm) in diameter and on 1/4 inch (.64 cm) centers such that the perforations form the apexes of equilateral triangles. It will be noted that in each case, at the lower octave bands, the best results occur when both screens are used.

Although a preferred embodiment of the present invention has been illustrated and described, other changes will occur to those skilled in the art. For example, the included angle of the legs of screen 30 is dependent upon the arc through which the damper blade travels since it is desirable to have leg 31 as perpendicular to the flow as possible over the entire range of movement so as to provide essentially the same flow resistance. It is therefore intended that the scope of the present invention is to be limited only by the scope of the appended claims.

## Claims

1. A control unit for an air distribution system comprising a housing (12) having an inlet (16, 17, 18, 19), an outlet and a flow path therebetween, damper means (20, 21, 22) mounted in said flow path and having a curved blade (22) mounted for rotation about an axis (21) transverse to said flow path for movement between a closed position and an open position and coacting with said inlet for controlling flow through said flow path, characterized by screen means (30) attached to said blade (22) and extending into said flow path when said blade is in an open position whereby at least a portion of said flow path is through said screen means (30).

2. The control unit of claim 1 wherein said screen means extends from said blade for a distance between one half inch and one inch (1.27 and 2.54 cm).

3. The control unit of claim 2 wherein said screen means has a porosity of approximately 35—65%.

4. The control unit of claim 1 further including a second screen means (40) mounted in said flow path immediately downstream of said inlet and spaced from said housing so as to form a chamber (42) therewith whereby air flowing through said damper means flows over said spaced second screen means to break up eddy currents generated at the damper.

5. The control unit of claim 4 wherein said second screen means has a porosity of approximately 35—65%.

6. A control unit for an air distribution system comprising a housing (12) having an inlet (16, 17, 18, 19), an outlet and a flow path therebetween, damper means (20, 21, 22) mounted in said flow path and having a curved blade (22) mounted for rotation about an axis (21) transverse to said flow path for movement between a closed position and an open position and coacting with said inlet for controlling flow through said flow path, characterized by screen means (40) mounted in said flow path immediately downstream of said inlet and spaced from said housing so as to form a chamber (42) therewith whereby air flowing through said damper means flows over said screen means to break up eddy currents generated at the damper.

7. The control unit of claim 6 wherein said screen means have a porosity of approximately 35—65%.

## Patentansprüche

1. Steuerungsgerät für ein Luftverteilersystem bestehend aus einem Gehäuse (12) mit einem Einlaß (16, 17, 18, 19), einem Auslaß und einem dazwischen liegenden Strömungsweg, und aus Drosseleinrichtungen (20, 21, 22), die in dem Strömungsweg montiert sind und eine gekrümmte Klappe (22) aufweisen, die drehbar um eine quer zum genannten Strömungsweg verlaufende Achse (21) zum Zwecke der Bewegung zwischen einer Schließstellung und einer Offenstellung montiert ist und mit dem genannten Einlaß zur Steuerung der Strömung durch den Strömungsweg in Berührung steht, gekennzeichnet durch ein Drahtnetz (30), das an der Klappe (22) angebracht ist und sich in den Strömungsweg erstreckt, wenn sich die Klappe in einer Offenstellung befindet, wobei wenigstens ein Teil des Strömungsweges durch das Drahtnetz (30) verläuft.

2. Steuerungsgerät nach Anspruch 1, dadurch gekennzeichnet, daß sich das Drahtnetz von der Klappe aus über einen Abstand zwischen 1,27 und 2,54 cm erstreckt.

3. Steuerungsgerät nach Anspruch 2, dadurch gekennzeichnet, daß das Drahtnetz eine Porosität von annähernd 35—65 % besitzt.

4. Steuerungsgerät nach Anspruch 1, dadurch gekennzeichnet, daß sie weiters ein zweites Drahtnetz (40) aufweist, das in dem genannten Strömungsweg unmittelbar hinter dem Einlaß und im Abstand vom Gehäuse montiert ist, um mit diesem eine Kammer (42) zu bilden, wobei die durch die Drosseleinrichtung strömende Luft über das genannte, im Abstand angeordnete zweite Drahtnetz strömt, um in der Drosseleinrichtung erzeugte Wirbelströme zu brechen.

5. Steuerungsgerät nach Anspruch 4, dadurch gekennzeichnet, daß das genannte zweite Drahtnetz eine Porosität von annähernd 35—65 % besitzt.

6. Steuerungsgerät für ein Luftverteilersystem bestehend aus einem Gehäuse (12) mit einem Einlaß (16, 17, 18, 19), einem Auslaß und einem dazwischen liegenden Strömungsweg, und aus Drosseleinrichtungen (20, 21, 22), die in dem Strömungsweg montiert sind und eine gekrümmte Klappe (22) aufweisen, die drehbar um eine quer zum genannten Strömungsweg verlaufende Achse (21) zum Zwecke der Bewegung zwischen einer Schließstellung und einer Offenstellung montiert ist und mit dem genannten Einlaß zur Steuerung der Strömung durch den Strömungsweg in Berührung steht, gekennzeichnet durch ein Drahtnetz (40), das in dem genannten Strömungsweg unmittelbar hinter dem Einlaß und im Abstand vom Gehäuse montiert ist, um mit diesem eine Kammer (42) zu bilden, wobei die durch die Drosseleinrichtung strömende Luft über das Drahtsieb strömt, um in der Drosseleinrichtung erzeugte Wirbelströme zu brechen.

7. Steuerungsgerät nach Anspruch 6, dadurch gekennzeichnet, daß das Drahtsieb eine Porosität von annähernd 35—65 % besitzt.

## Revendications

1. Bloc de commande pour système de distribution d'air comprenant un carter (12) pourvu d'une entrée (16, 17, 18, 19), d'une sortie et d'un trajet d'écoulement d'air entre entrée et sortie, un moyen d'amortissement (20, 21, 22) monté dans ledit trajet d'écoulement et ayant une lame incurvée (22) montée de façon à pouvoir pivoter autour d'un axe (21) transversal audit trajet d'écoulement pour se déplacer entre une position fermée et une position ouverte et agissant de concert avec ladite entrée pour commander l'écoulement à travers ledit trajet d'écoulement, caractérisé par un moyen d'écran (30) fixé à ladite lame (22) et faisant saillie dans ledit trajet d'écoulement lorsque ladite lame se trouve en position ouverte, de sorte qu'au moins une partie dudit trajet d'écoulement traverse ledit moyen d'écran (30).

2. Le bloc de commande de la revendication 1, dans lequel ledit moyen d'écran fait saillie de ladite lame d'une longueur comprise entre 1,27 et 2,54 cm.

3. Le bloc de commande de la revendication 2, dans lequel ledit moyen d'écran présente une porosité d'environ 35 à 65%.

4. Le bloc de commande de la revendication 1, comprenant en outre un second moyen d'écran (40) monté dans ledit trajet d'écoulement immédiatement en aval de ladite entrée et espacé dudit carter de façon à constituer une chambre (42) avec ce dernier, de sorte que l'air traversant ledit moyen amortisseur s'écoule sur le second moyen d'écran espacé pour briser les courants tourbillonnaires se produisant sur l'amortisseur.

5. Le bloc de commande de la revendication 4, dans lequel ledit second moyen d'écran a une porosité d'approximativement 35 à 65%.

6. Un bloc de commande pour système de distribution d'air comprenant un carter (12) pourvu d'une entrée (16, 17, 18, 19) et d'une sortie ainsi que d'un trajet d'écoulement entre entrée et sortie, un moyen amortisseur (20, 21, 22) monté dans ledit trajet d'écoulement et ayant une lame incurvée (22) montée de façon à pouvoir pivoter autour d'un axe (21) transversal audit trajet d'écoulement de façon à se déplacer entre une position fermée et une position ouverte et agissant de concert avec ladite entrée pour commander le débit à travers ledit trajet d'écoulement, caractérisé par un moyen d'écran (40) monté dans ledit trajet d'espacement immédiatement en aval de ladite entrée et espacée dudit carter de façon à constituer une chambre (42) avec ce dernier, de sorte que l'air s'écoulant à travers ledit moyen amortisseur s'écoule sur ledit moyen d'écran pour briser les courants tourbillonnaires produits dans l'amortisseur.

7. Le bloc de commande de la revendication 6 dans lequel le moyen d'écran a une porosité d'approximativement 35—65%.

FIG. I

FIG. 2

0 053 302

## OCTAVE BANDS
### (CYCLES)

| | 63 | 125 | 250 | 500 | 1000 | 2000 | 4000 | 8000 | |
|---|---|---|---|---|---|---|---|---|---|
| RADIATED NOISE (SOUND POWER LEVEL) | 67 | 72 | 67 | 61 | 51 | 43 | 40 | 41 | NO SCREENS |
| | 65 | 67 | 62 | 58 | 49 | 43 | 41 | 40 | SCREEN ON DAMPER |
| | 67 | 70 | 64 | 56 | 46 | 39 | 38 | 31 | TOP SCREEN |
| | 64 | 63 | 59 | 54 | 44 | 38 | 39 | 32 | SCREEN ON DAMPER AND TOP SCREEN |

TESTS RUN AT 800 CFM, $P_s = 2$ INCHES OF WATER
AND USING SCREENS WITH 3/16" DIA. X 1/4" ON
CENTER PERFORATIONS

## *FIG. 3*

0 053 302